# EUROPEAN PATENT APPLICATION

(11) **EP 2 372 115 A1**
(43) Date of publication of application: **05.10.2011**
(21) Application number: 09834754.5
(22) Date of filing: 16.12.2009
(51) Int. Cl.: F01K 23/10, B63H 21/14, B63J 3/02, F01D 15/10, F02B 41/10, F02C 6/00, F02C 9/18

(54) **CONTROL METHOD AND CONTROL DEVICE FOR EXHAUST HEAT RECOVERY SYSTEM FOR MARINE VESSEL**

(30) Priority: 25.12.2008 JP 2008331595
(71) Applicant: Mitsubishi Heavy Industries, Ltd., Tokyo 108-8215 (JP)
(72) Inventor: KAGIMOTO, Yoshimi, Nagasaki-shi Nagasaki 851-0392 (JP); OHTA, Yuji, Nagasaki-shi Nagasaki 851-0392 (JP)
(74) Representative: Henkel, Breuer & Partner
(86) International application number: PCT/JP2009/070993
(87) International publication number: WO 2010/073951

(57) **Abstract**

Disclosed are a control method and a control device for an exhaust heat recovery system which are capable of preventing an onboard supply power outage in response to a sharp change in the load of the main drive machine- For an exhaust heat recovery system for which a portion of the exhaust gas generated by the ship's main drive machine is supplied to a gas turbine and the amount of heat of the exhaust gas exhausted by the gas turbine is conducted to an exhaust gas economizer, this control method and control device: obtain an estimated or calculated current reserve amount of heat (Q), which is based on the heat energy detection signal of the exhaust gas economizer; obtain, based on the operation state of an auxiliary electrical generator and on the onboard power demand, a reference amount of heat (Qₘᵢₙ), which is required to maintain the requisite power until the auxiliary electrical generator starts up; compare the current reserve amount of heat (Q) and the reference amount of heat (Qₘᵢₙ); and, based on the result of the comparison, select the operating state of the auxiliary electrical generator from either stop, idle or driving operation.

## Description

### BACKGROUND OF THE INVENTION

### Field of the Invention

The present invention relates to a control method and a control device for an exhaust heat recovery system for a marine vessel, in particular, a control method and a control device for an exhaust heat recovery system which changes an operation state of an auxiliary generator based on a reserve heat amount of the exhaust gas economizer.

### Description of the Related Art

As an exhaust heat recovery system for vessels, there is a power generation system wherein a steam turbine is driven by performing heat exchange with exhaust gas discharged from a main engine with use of an exhaust gas economizer which utilizes the exhaust gas from the main engine, and a system wherein the supply power is generated by rotating a shaft generator by engine output so as to compensate for electric power demand within the vessel. These types of systems have been proposed in view of saving power in the vessel.

The exhaust heat recovery system generates electricity within the vessel by using the exhaust heat from the main drive unit of the vessel, e.g. an engine. Thus, once the power demand (electricity demand within the vessel) suddenly decreases, the electricity having been generated becomes surplus. Then, the rotation of the steam turbine and the gas turbine gets accelerated, which may causes damage to the turbines.
In contrast, a sudden stop of the engine causes a supply power shortage within the vessel, and in the worst case, the vessel can experience a blackout.

To take measure against the surplus power, it is possible to bypass the exhaust gas from the main drive unit (diesel engine) of the vessel to discharge the exhaust gas outside, or to release surplus steam having been generated in the exhaust gas economizer to a condenser so as to suppress production of electricity. In such case that the engine stops abruptly and there is supply power shortage, a power demand with low necessity is shut down and an auxiliary diesel generator is actuated while waiting for the power supply. However, this still leaves an issue that the vessel inevitably still goes into blackout when the power generation by the exhaust heat recovery system decreases before the power is supplied by the diesel generator.

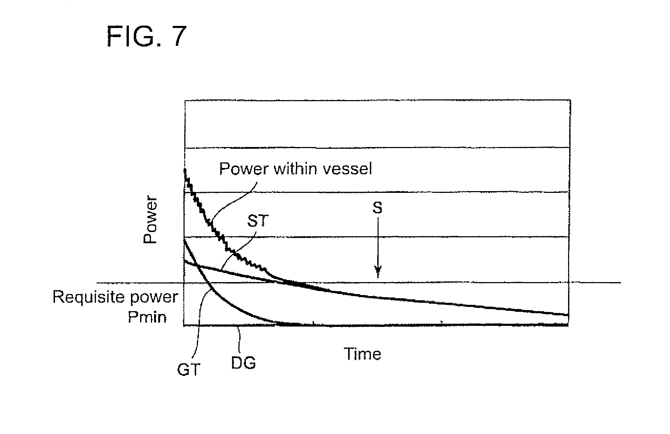

The change of the supply power within the vessel due to the sudden stop of the main drive unit is illustrated in FIG.7. The power within the vessel is supplied by a shaft generator powered by the main engine (engine), a generator powered by a gas turbine or a steam turbine, and an auxiliary diesel generator. Herein, explained is the case in which both the power from the shaft generator and the generator stop or decline due to the sudden stop of the engine.

As shown in FIG.7, the main generator, which is powered by the exhaust gas from the main drive unit, also stops when the main drive unit stops. FIG.7 shows the decline of the supply power within the vessel after the main drive unit stops in a time-oriented manner. In the figure, ST indicates a change of the power generated by the main generator, which corresponds to the rotation speed of the steam turbine, GT indicates a change of the power generated by the main generator, which corresponds to the rotation speed of the gas turbine, and DG indicates a change of the power generated by the auxiliary diesel generator. The power generated by the gas turbine (GT) drops faster than the power generated by the steam turbine (ST). This is because the exhaust gas economizer equipped in the exhaust heat recovery system has large heat capacity. The heat amount reserved in the exhaust gas economizer varies depending on an operation condition under a normal control. Therefore, when the power generated by the generator (main generator) declines suddenly and there is reserve heat amount equal to or more than a predetermined amount, there is enough power to hold up till a point S when the auxiliary diesel generator (DG) starts and which is needed to start a load operation for the power generation by the auxiliary generator. However, if the reserve heat amount Q is smaller than a requisite power generation, the vessel goes into blackout. The requisite power generation corresponds to a minimal requisite power needed within the vessel for a security reason to avoid the blackout.

To prevent the blackout due to the sudden decline of the power generation by the generator such as the main generator, it is possible to perform the control described below. For instance, Patent Document 1 (JP 3804693B) proposes to suppress control delay by focusing on a temperature change of cooling water in response to a change of a recovered amount of the exhaust heat. Specifically, the invention of Patent Document 1 comprises: a temperature sensor which is arranged in a circulation pipe of the load side on a downstream side of an exhaust heat recovery unit and detects a temperature of circulating water on the load side; an amount detector which compares the temperature of the circulating water detected by the temperature sensor and a first preset temperature and output a heat-discharge signal depending on whether or not there exists an abnormal fluid state; a fluid state detector which is arranged in the circulation pipe of the load side and detects whether the fluid state of the circulation water on the load side is normal or abnormal and then outputs a heat discharge signal according to the fluid state; a holding means which outputs a heat discharge signal till a temperature of cooling water detected by a cooling water temperature sensor becomes below a second preset temperature; a feedforward-side control unit which outputs a control signal in response to the heat discharge signal so that an opening of a heat-discharge amount adjusting means is smaller than a preset opening in which the engine operates at a rated power and requisite amount of the cooling water is supplied to a heat exchanger for heat-discharge when the exhaust heat of a heat exhaust recovery load is not needed; and a feedback control means which output a signal to control the heat-discharge amount adjusting means based on the detected temperature of the cooling water so that the heat discharge amount increases as the detected temperature becomes higher, wherein the heat-discharge amount adjusting means is controlled by sum of the control output from the feed forward control means and the control output from the feedback control means.

However, the exhaust heat recovery system of Patent Document 1 focuses on the temperature of the cooling water to control the system, and fails to focus on the amount of heat (the amount of reserve heat) stored in the exhaust gas economizer on the vessel.

### [RELATED PATENT DOCUMENT]

### [PATENT DOCUMENT]

[PATENT DOCUMENT 1] JP 3804693B

### SUMMARY OF THE INVENTION

In view of the problem above, an object of the present invention is to provide a control method and a control device for an exhaust heat recovery system which can prevent blackout within the vessel due to the sudden load change of the main engine.

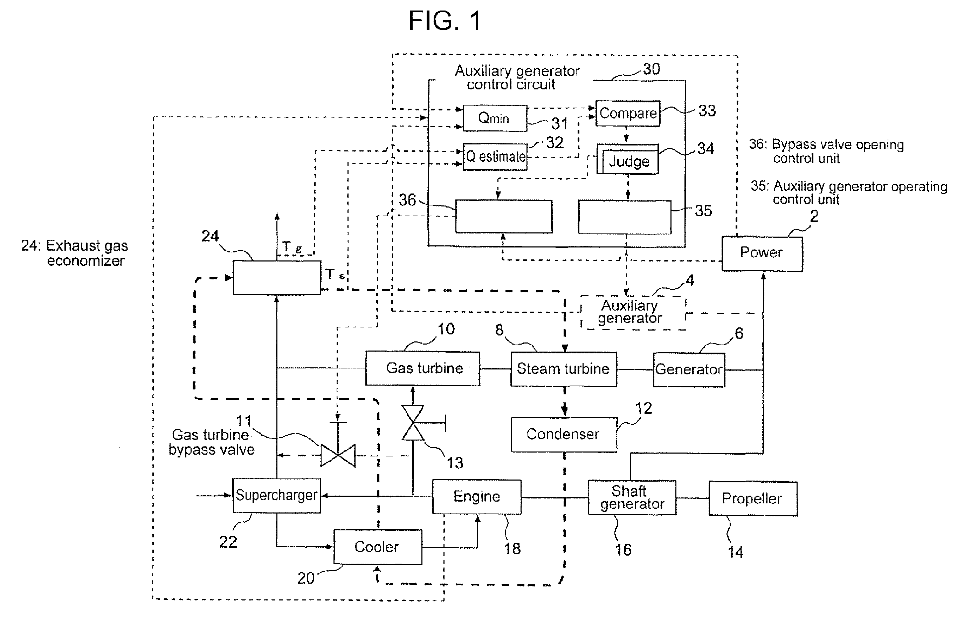

To solve the problem, as a first specific example of a first aspect of the present invention, the present invention proposes a control method for an exhaust heat recovery system which comprises an exhaust gas economizer to which exhaust gas generated in a main engine of a vessel is introduced via a turbocharger, a steam turbine powered by steam generated in the exhaust gas economizer, a gas turbine driving a generator together with the steam turbine, and an auxiliary generator compensating for a decline in electricity based on power generation by the generator, and in which a portion of the exhaust gas generated in the main engine is supplied to the gas turbine so as to discharge the exhaust gas from the gas turbine to the exhaust gas economizer, the control method comprising the steps of:
acquiring an estimated or calculated current reserve heat amount (Q) based on a heat energy detection signal of the exhaust gas economizer;
acquiring, based on an operation state of the auxiliary generator and power demand within the vessel, a reference heat amount (Qₘᵢₙ) which is required to maintain requisite power needed until the auxiliary generator is actuated;
comparing the current reserve heat amount (Q) and the reference heat amount (Qₘᵢₙ); and
selecting an operation state of the auxiliary generator based on a result of the comparing step, from a shutoff state, a standby state and a driving state.
The exhaust gas economizer is a device specifically for vessels and may be installed in a chimney of the vessel. For instance, heat exchanging pipes are closely installed in the chimney and water is introduced through the pipes so as to produce steam or heat water by performing heat exchange with the exhaust gas discharged from the main engine.
The current reserve heat amount Q may be calculated from (amount and temperature of) cooling water introduced to the exhaust gas economizer from a cooler (ref. FIG.1, 20), (amount and temperature of) the exhaust gas a turbocharger 22, heat transfer effect of the exhaust gas economizer, and (amount and temperature of) the steam and the exhaust gas which are discharged from the exhaust gas economizer. The current reserve heat amount Q can be obtained by an estimated formula from the outlet temperature Ts of the steam and/or the outlet temperature Tg of the exhaust gas, or estimated from a metal temperature of metallic parts such as pipes of the exhaust gas economizer.
Moreover, the auxiliary generator includes an auxiliary generator body and a drive unit such as a diesel engine being directly or indirectly connected to the auxiliary generator body. The auxiliary generator has three operation states: a shutoff state in which the drive unit is shutoff; a standby state in which the auxiliary generator is disconnected from the drive unit which is still actuated and the auxiliary generator is not rotating (commonly called, an idling operation); and a driving state in which the auxiliary generator body and the drive unit are connected to transmit the energy of the drive unit side to the auxiliary generator side.

According to the present invention, the current reserve heat amount (Q) and the reference heat amount (Qₘᵢₙ) are compared, and the operation state of the auxiliary generator is selected based on a result of the comparing step, from the shutoff state, the standby state and the driving state so that the current reserve heat amount (Q) becomes greater than the reference heat amount (Qₘᵢₙ). As a result, it is possible to start up the auxiliary generator before the supply power within the vessel becomes lower than the requisite power even when there is a sudden output decline of the main engine and thus, the requisite power generation (the power generation corresponding to the minimal requisite power within the vessel needed for a security reason to avoid the blackout) can be secured and the blackout within the vessel can be avoided.

More specifically, as a second specific example, it is preferable that the auxiliary generator is shut off when the current reserve heat amount (Q) reserved in the exhaust gas economizer is greater than the reference heat amount (Qₘᵢₙ) and a reserve heat amount (Qₛₜₒₚ) which is required to maintain requisite power until the auxiliary generator gets in a state to generate power from the shutoff state when the main engine stops, i.e. Q ≧ Qₛₜₒₚ > Qₘᵢₙ.
By this, the requisite power generation can be maintained without generating surplus power within the vessel, thereby saving the auxiliary generator from the non-stop operation.

Furthermore, as a second specific example, it is preferable that the auxiliary generator is set in the standby state when the current reserve heat amount (Q) reserved in the exhaust gas economizer is smaller than the reserve heat amount (Qₛₜₒₚ) and greater than a reserve heat amount (Q_{stby}) which is required to maintain requisite power until the auxiliary generator get in a state to generate power from the standby state when the main engine stops, i.e. Qₛₜₒₚ > Q ≧ Q_{stby} > Qₘᵢₙ.
In this manner, it is possible to actuate the auxiliary generator by keeping the auxiliary generator in the standby state. Thus, the blackout within the vessel can be avoided even when the output of the main engine declines suddenly.

Moreover, as a third specific example, it is also preferable that the auxiliary generator is set in the driving state when the current reserve heat amount (Q) reserved in the exhaust gas economizer is smaller than both the reserve heat amount (Qₛₜₒₚ) and the reserve heat amount (Q_{stby}), i.e. Qₛₜₒₚ > Q_{stby} ≧ Q ≧ Qₘᵢₙ.
When the current reserve heat amount (Q) reserved in the exhaust gas economizer is smaller than both the reserve heat amount (Qₛₜₒₚ) and the reserve heat amount (Q_{stby}), the auxiliary generator is actuated immediately from the standby state to avoid the blackout within the vessel.

Therefore, the present invention is unique in the points described below.
1. Qₘᵢₙ ≧ Q is avoided by controlling the operation state of the auxiliary generator when the main engine is still operating (before the sudden stop of the main engine). By this, the power generation which corresponds to the minimal requisite power needed within the vessel for a security reason to avoid the blackout, can be promptly obtained even when the main engine stops (the sudden drop of the output of the main generator caused by the sudden energy drop of the exhaust gas).
   In this case, the current reserve heat amount Q is obtained by the calculation or estimation. And it is determined which one of the operation states 2-4 listed below the estimated/calculated current reserve heat amount is in, and the operation state is selected.
2. Qₛₜₒₚ > Q_{stby} ≧ Q ≧ Qₘᵢₙ →continuing the driving state
3. Qₛₜₒₚ > Q ≧ Q_{stby} > Qₘᵢₙ →the standby state (idling operation state)
4. Q ≧ Qₛₜₒₚ > Qₘᵢₙ →the shutoff state

As a second aspect of the present invention, the above control method may further comprise the step of:
adjusting an opening of a bypass valve so that the current reserve heat amount (Q) reserved in the exhaust gas economizer becomes greater than the reference heat amount (Qₘᵢₙ), the bypass valve adjusting a flow rate of the exhaust gas and being arranged in a bypass line which bypasses the gas turbine to supply a portion of the exhaust gas generated in the main engine to the exhaust gas economizer.
By this, even when the output of the main engine drops suddenly, the reserve heat amount Q reserved in the exhaust gas economizer can be increased and thus, it is possible to maintain the requisite power needed till the auxiliary generator is actuated, thereby preventing the blackout within the ship.

Further, as a first specific example of the second aspect of the present invention, it is preferable that the opening of the bypass valve is reduced when the current reserve heat amount (Q) reserved in the exhaust gas economizer is greater than a reserve heat amount (Qₛₜₒₚ) which is required to maintain requisite power until the auxiliary generator gets in a state to generate power from the shutoff state when the main engine stops.
By this, the requisite power can be maintained without causing power surplus within the vessel.

Furthermore, as a second specific example of the second aspect of the present invention, it is also preferable to increase the opening of the bypass valve when the current reserve heat amount (Q) reserved in the exhaust gas economizer is smaller than the reserve heat amount (Qₛₜₒₚ) which is required to maintain requisite power until the auxiliary generator gets in a state to generate power from the shutoff state when the main engine stops.
By this, the reserve heat amount Q reserved in the exhaust gas economizer is increased and thus the heat recovery in the steam turbine can be increased as well. As a result, the period when the auxiliary generator can be inactive is increased, thereby saving fuel.

As a device to perform the above method in a preferable manner, the present invention also proposes a control device for an exhaust heat recovery system which comprises an exhaust gas economizer to which exhaust gas generated in a main engine of a vessel is introduced via a turbocharger, a steam turbine powered by steam generated in the exhaust gas economizer, a gas turbine driving a generator together with the steam turbine, an auxiliary generator compensating for a decline in electricity based on power generation by the generator and a portion of the exhaust gas generated in the main engine is supplied to the gas turbine so as to discharge (amount of heat of) the exhaust gas from the gas turbine to the exhaust gas economizer, the control device comprising:
an acquiring unit which estimates or calculates a current reserve heat amount (Q) based on a heat energy detection signal of the exhaust gas economizer;
an acquiring unit which obtains, based on an operation state of the auxiliary generator and power demand within the vessel, a reference heat amount (Qₘᵢₙ) which is required to maintain requisite power until the auxiliary generator is actuated; and
a control unit which controls the auxiliary generator by selecting an operation state of the auxiliary generator from a shutoff state, a standby state and a driving state so that the current reserve heat amount (Q) becomes greater than the reference heat amount (Qₘᵢₙ).

Further, the above-mentioned control device may preferably comprise:
a bypass line which bypasses the gas turbine to supply a portion of the exhaust gas generated in the main engine to the exhaust gas economizer;
a bypass valve which is arranged in the bypass line and changes a flow rate of the exhaust gas; and
a bypass valve adjusting unit which adjusts an opening of the bypass valve so that the current reserve heat amount (Q) reserved in the exhaust gas economizer becomes greater than the reference heat amount (Qₘᵢₙ).
By this, in the same manner as the above-described method, the blackout within the vessel can be prevented against the sudden load change of the main engine by accelerating the actuation of the auxiliary generator or by maintaining the requisite power until the actuation of the auxiliary generator.

According to the present invention, the vessel can be operated for a while by the heat amount reserved in the exhaust gas economizer even if the engine stops suddenly and thus, it is possible to avoid the blackout within the vessel by keeping the reserve heat amount of the exhaust economizer not less than a predetermined amount.
The present invention successfully provides the control method and the control device for the exhaust heat recovery system, which can prevent the blackout within the vessel against the sudden load change of the main engine.

### BRIEF DESCRIPTION OF THE DRAWINGS

[FIG.1] A block diagram illustrating a configuration of an electric system of a vessel equipped with an exhaust heat recovery system to which first and second preferred embodiments of the present invention are applied.
[FIG.2] A graph chart illustrating a relationship between a reserve heat amount of the exhaust gas economizer and backup time of the auxiliary generator with the backup time on the y-axis and the reserve heat amount on the x-axis.
[FIG.3] A graph chart illustrating a change of supply power within the vessel over time when the engine stops suddenly in relation to the first preferred embodiment.
[FIG.4] A flow chart illustrating a control logic operation in relation to the first preferred embodiment.
[FIG.5] A graph chart illustrating a change of supply power within the vessel over time when the engine stops suddenly in relation to the second preferred embodiment.
[FIG.6] A flow chart illustrating a control logic operation in relation to the second preferred embodiment.
[FIG.7] A graph chart illustrating a change of supply power within the vessel over time when the engine stops suddenly in relation to a conventional case.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

First, a configuration of an exhaust heat recovery system in relation to the present invention is explained in reference with FIG.1 of a block diagram illustrating a configuration of an electric system of a vessel equipped with an exhaust heat recovery system to which first and second preferred embodiments of the present invention are applied. The exhaust heat recovery system of FIG.1 comprises an engine 18 propelling the vessel, a shaft generator 16 powered by the engine 18, a propeller 14 rotated by the output of the engine 18, a turbocharger 22 compressing the air to be supplied to the engine 18, a cooler 20 cooling the air from the turbocharger 22, a generator 6, and an auxiliary generator 4. And power 2 within the vessel is supplied by the shaft generator 16, the generator 6, and the auxiliary generator 4. Although not shown in the drawings, the exhaust heat recovery system may not comprise the shaft generator 16.

Further, the exhaust heat recovery system of the present invention is equipped with an exhaust gas economizer 24. The exhaust gas discharged from the engine 18 is supplied to the exhaust gas economizer 24 via the turbocharger 22 or the gas turbine. The exhaust gas economizer 24 produces steam out of the exhaust gas and the steam turbine 8 is then driven by the steam and rotates the generator 6 together with the output of the gas turbine 10.
The dotted line in FIG.1 indicates a supply line of the steam and water. The steam is returned to water in a condenser 12 arranged on a downstream side of the steam turbine 8. The water is heated by the heat of the cooler 20 and the heat for cooling walls of the engine 18, and then supplied to the exhaust gas economizer 24 to evaporate the water, thereby producing the steam.

Furthermore, the auxiliary generator 4 functions as an auxiliary diesel generator (DG) having a diesel engine connected to a body thereof. The auxiliary generator has three operation states: a shutoff state in which the diesel engine is shutoff; a standby state in which the auxiliary generator 4 is disconnected from the diesel engine which is still actuated and the auxiliary generator is not rotating (commonly called, an idling operation at a low speed); and a driving state in which the auxiliary generator body and the diesel engine are connected so as to generate power.
During the operation of the auxiliary generator 4, the auxiliary generator 4 generates at least minimal requisite power required within the vessel for a security reason to avoid the blackout.
A control circuit 30 for the auxiliary generator 4 includes a calculation circuit 31, an estimation circuit 32, a comparison unit 33, a judging circuit 34, an auxiliary generator operation control unit 35, and a bypass valve control unit 36. The calculation circuit 31 sets a period of time needed to actuate the auxiliary generator based on requisite power required within the vessel for a security reason (hereinafter simply referred to as the requisite power) and the operation state of the auxiliary generator, and then calculates a reference heat amount Qₘᵢₙ of the exhaust gas economizer needed to generate enough steam energy to drive the steam turbine so as to drive the main generator for the period previously set. The estimate circuit 32 estimate a current reserve heat amount Q of the exhaust gas economizer 24 from an outlet temperature Ts of the steam and/or an outlet temperature Tg of the exhaust gas from the exhaust gas economizer 24. The comparison unit 33 compares the current reserve heat amount Q and the reference heat amount Qₘᵢₙ and the obtained result of the comparison is sent to the judging circuit 34. An appropriate operation state is selected by the auxiliary generator operation control unit 35 and the bypass valve control unit 36 by the control of the judging circuit.

The auxiliary generator operation control unit 35 controls the auxiliary generator during the normal operation of the main engine (before the sudden stop of the main engine) to avoid the reserve heat amount Q reserved in the exhaust gas economizer being smaller than the reference heat amount Qₘᵢₙ, i.e. Qₘᵢₙ ≧ Q by selecting an operation state of the auxiliary generator from the shutoff state, the standby state and the driving state or by forcibly starting (actual driving) the auxiliary generator at a point when the sudden stop of the engine is detected by a detection sensor arranged on the engine side to detect the sudden stop of the main engine (the engine 18).

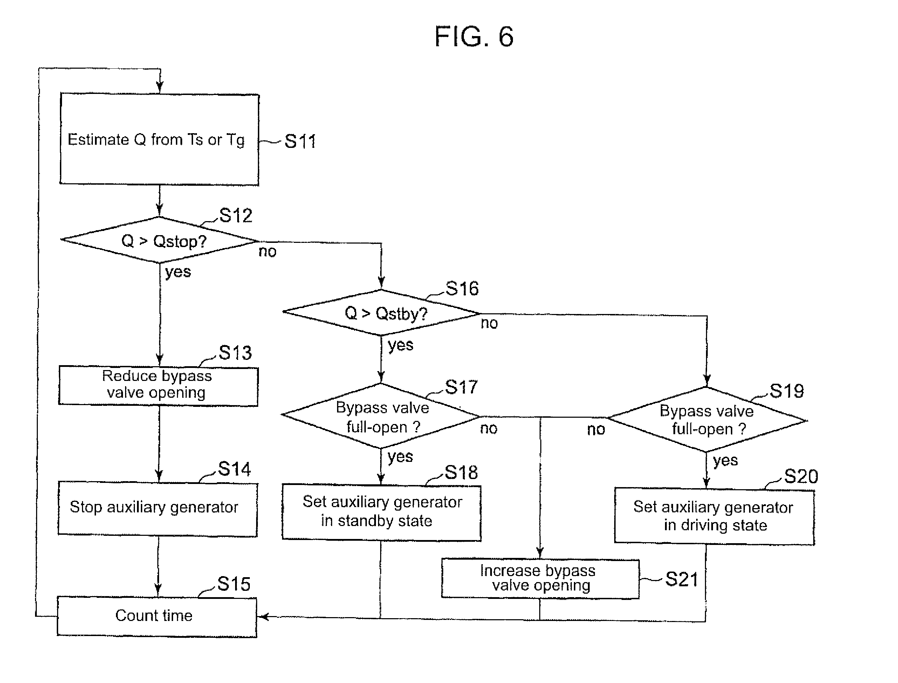

Moreover, the electricity within the vessel is generated with use of the exhaust gas of the main engine (engine) of the vessel and thus, when there is a sudden decline in the load, the power being generated becomes surplus. Therefore, the rotation of the gas turbine is accelerated, thereby causing damage thereof. To take measure against the issue caused by power surplus, the bypass valve control unit 36 is provided to open the bypass valve 11 fully and/or control the opening of the bypass valve 11 to bypass the gas turbine to supply the exhaust gas from the main engine (diesel engine). The current reserve heat amount Q estimated during the process is compared with Qₛₜₒₚ to perform the control of FIG.6, which is described hereinafter.

To prevent the blackout of the vessel against the sudden demand power change of the vessel being equipped with the above exhaust heat recovery system, it is preferable to set control values listed below in advance.
Pₘᵢₙ : Minimal requisite power needed within the vessel for a security reason to avoid the blackout
Sₛₜₒₚ : Time needed for the auxiliary generator to get to a state capable of generating power from the shutoff state (time that takes to reach the drive load corresponding to the minimal requisite power Pₘᵢₙ from a point at which the auxiliary generator is actuated)
S_{stby}: Time needed for the auxiliary generator to get to a state capable of generating power from the idling state (time that takes to reach the drive load corresponding to the minimal requisite power Pmin by actual-driving from the idling state)
Qₛₜₒₚ : Heat amount needed for power generation Pₛ by the steam turbine to reach the minimal requisite power Pₘᵢₙ from the shutoff state of the engine for the time Sₛₜₒₚ or longer Q_{stby} : Heat amount needed for power generation Pₛ by the steam turbine to reach the minimal requisite power Pₘᵢₙ from the shutoff state of the engine for the time Sₛₜₒₚ or longer

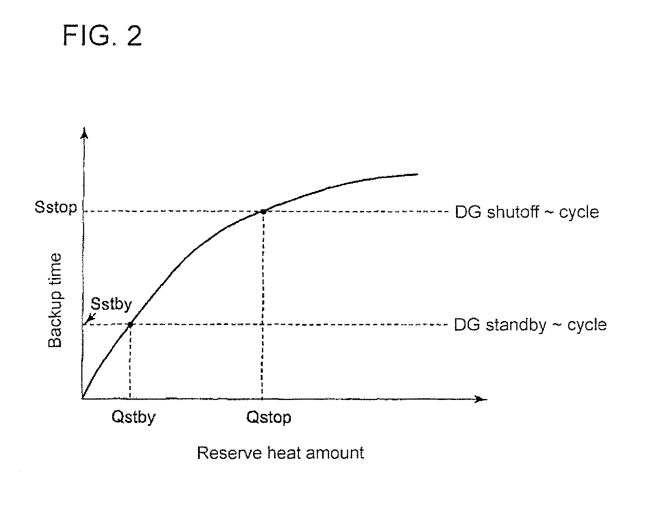

In FIG.2, DG is the auxiliary generator which functions as an auxiliary diesel generator, the y-axis is a backup time, and the x-axis is reserve heat amount of the exhaust gas economizer. The control values listed above are shown in FIG.2. As shown in the graph chart of FIG.2, there is a proportional correlation between Sₛₜₒₚ > S_{stby} and Qₛₜₒₚ > Q_{stby}.

### [FIRST PREFERRED EMBODIMENT]

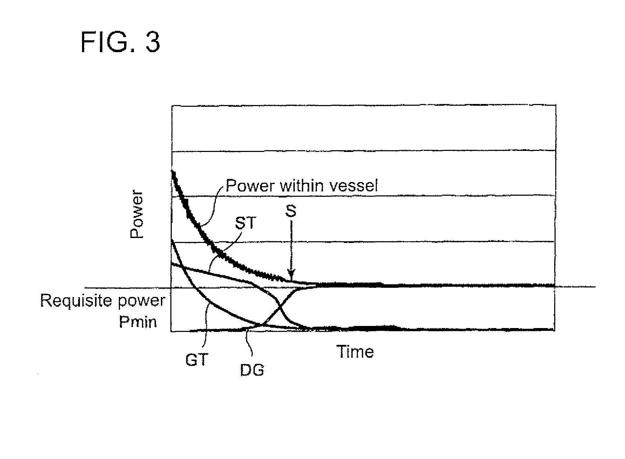

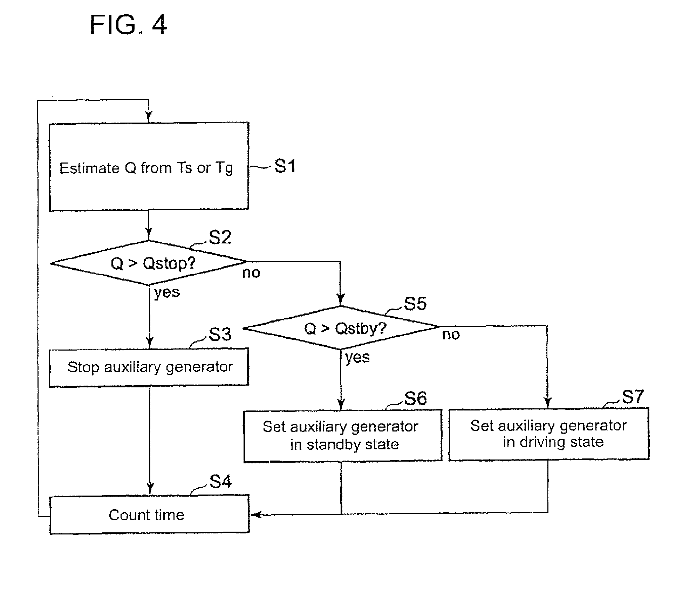

Next, a control method for the exhaust heat recovery system in relation to the first preferred embodiment is explained in reference to FIG.3 and FIG.4. The exhaust heat recovery system of the preferred embodiment is already illustrated in FIG.1 and thus will not be explained further.
FIG.3 is a graph chart illustrating a change of supply power within the vessel over time when the engine stops suddenly in relation to the first preferred embodiment. More specifically, FIG.3 shows a supply power decline within the vessel after the main engine stops and ST indicates the power generated by the main generator in response to the rotation speed of the steam turbine, GT indicates the power generated by the main generator in response to the rotation speed of the gas turbine, DG indicates the power generated by the auxiliary diesel generator. The power within the vessel is supplied by the shaft generator powered by the engine, the generator driven by the output of the gas turbine and the steam turbine, and the auxiliary diesel generator. Hereinafter, the control method against the sudden load change caused by the sudden stop of the main engine, is explained.

As illustrated in FIG.3, the sudden stop of the engine causes the power generation by both the gas turbine (GT) and the steam turbine (ST) to decline, thereby causing the supply power within the vessel to drop dramatically. The power decline of the steam turbine is slower than that of the gas turbine due to the reserve heat amount in the exhaust gas economizer.
Therefore, in the preferred embodiment, the control is performed so as to accelerate the actuation of the auxiliary generator (DG) as indicated by the arrow S of FIG.3. Specifically, the auxiliary generator is actuated before reaching the minimal requisite power Pₘᵢₙ needed within the vessel for a security reason to avoid the blackout and thus, it is necessary to focus on the reserve heat amount Q reserved in the exhaust gas economizer. It is already described above how to obtain the calculated or estimated reserve heat amount Q.

The control method for the exhaust heat recovery system of the first preferred embodiment is explained in reference to FIG.4. Q is the heat amount (reserve heat) reserved in the exhaust gas economizer, Qₘᵢₙ is the requisite heat amount required to sustain the requisite power Pₘᵢₙ until the auxiliary generator is actuated. The requisite heat amount Qₘᵢₙ is obtained from the requisite power Pₘᵢₙ and the operation state of the auxiliary generator such as the shutoff state and the standby state. When the auxiliary generator 4 is not shutoff, Qₘᵢₙ=Qₛₜₒₚ, and when the auxiliary generator 4 is idling, Qₘᵢₙ=Q_{stby}. When the main engine (engine 18) is activated, the auxiliary generator is either in the standby state or the shutoff state. However, when the power demand within the vessel is large, the auxiliary generator may generate power supplimentarily.

First, in a step S1, the current reserve heat amount Q of the exhaust gas economizer is estimated from the steam temperature Ts or the outlet temperature Tg of the exhaust gas. The steam temperature Ts and the outlet temperature Tg of the exhaust gas are measured at the outlet of the exhaust gas economizer 24 as shown in FIG.1. Although not shown in the drawing, the current reserve heat amount Q may be estimated from a metal temperature of metallic parts such as the pipes of the exhaust gas economizer.
In a step S2, the current reserve heat amount Q estimated in S1 is compared with Qₛₜₒₚ. If Q > Qₛₜₒₚ, the auxiliary generator is set in the shutoff state in a step S3. Then, in a step S4, the time is counted and the process returns to the step S1.

If the inequality of Q > Qₛₜₒₚ is not satisfied, Q is compared with Q_{stby} in a step S5. If it is determined that Q > Q_{stby} in the step S5, the auxiliary generator is set in the standby state in a step S6. Then, in the step S4, the time is counted and the process returns to the step S1. In contrast, if it is determined that the inequality of Q > Q_{stby} is not satisfied in the step S5, the auxiliary generator is set in the driving state in a step S7. Then, in the step S4, the time is counted and the process returns to the step S1.

In this manner, the operation state of the auxiliary generator is selected from the shutoff state, the standby state and the driving state so that the auxiliary generator can be actuated faster even when the sudden decline of the engine output such as the sudden stop of the engine takes place. As a result, it is possible to avoid the blackout within the vessel.

### [SECOND PREFERRED EMBODIMENT]

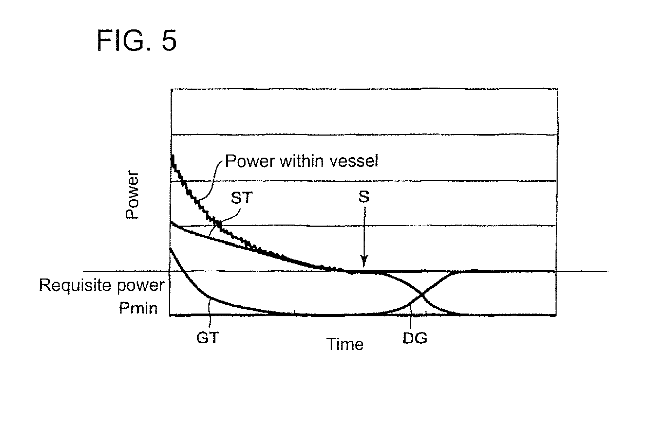

Next, a control method for the exhaust heat recovery system in relation to a second preferred embodiment is explained in reference to FIG.5 and FIG.6. The exhaust heat recovery system of the preferred embodiment is already illustrated in FIG.1 and thus will not be explained further.
The electricity within the vessel is generated with use of the exhaust gas of the main engine (engine) of the vessel and thus, when there is a sudden decline of the power demand, the power having been generated becomes surplus. Then, the rotation of the gas turbine is accelerated, thereby causing damage thereof. To take measure against the issue caused by power surplus, a bypass valve opening control unit 36 controls the opening of the bypass valve 11 based on the power demand within the vessel by opening the bypass valve 11 fully and/or controlling the opening of the bypass valve 11 to bypass the gas turbine to supply the exhaust gas from the main engine (diesel engine).
In this state, the current reserve heat amount Q for the exhaust heat recovery system is compared with Qₛₜₒₚ to perform the control of FIG.6, which is described hereinafter.
FIG.5 is a graph chart illustrating a change of supply power within the vessel over time when the engine stops suddenly in relation to the second preferred embodiment. In the same manner as the first preferred embodiment, the drawing shows a supply power decline within the vessel after the main engine stops and ST indicates the power generated by the main generator in response to the rotation speed of the steam turbine, GT indicates the power generated by the main generator in response to the rotation speed of the gas turbine, DG indicates the power generated by the auxiliary diesel generator. The supply power decline of the steam turbine is slower than that of the gas turbine due to the reserve heat amount of the exhaust gas economizer. Therefore, it is important in the preferred embodiment to sustain the requisite power Pₘᵢₙ until the auxiliary generator starts up as indicated with the arrow S in FIG.5.

A control method for the exhaust heat recovery system in relation to the second preferred embodiment is explained in reference to FIG.6. In the same manner as the first preferred embodiment, Q is the heat amount (reserve heat) reserved in the exhaust gas economizer, Qₘᵢₙ is the requisite heat amount required to sustain the requisite power Pₘᵢₙ until the auxiliary generator is actuated. The requisite heat amount Qₘᵢₙ is obtained from the power demand within the vessel, the requisite power Pₘᵢₙ and the operation state of the auxiliary generator such as the shutoff state and the standby state. When the auxiliary generator 4 is not shutoff, Qₘᵢₙ=Qₛₜₒₚ, and when the auxiliary generator 4 is idling,
Qₘᵢₙ=Q_{stby}.

First, in a step S11, the current reserve heat amount Q of the exhaust gas economizer is estimated from the steam temperature Ts or the outlet temperature Tg of the exhaust gas.
In a step S12, the current reserve heat amount Q estimated in S11 is compared with Qₛₜₒₚ. If Q > Qₛₜₒₚ, the opening amount of the bypass valve is reduced in a step S13. The bypass valve here is a gas turbine bypass valve 11 shown in FIG.1 and provided so as to bypass the gas turbine 10 when supplying the exhaust gas from the engine 18 to the exhaust gas economizer 24. Next, in a step S14, the auxiliary generator is stopped and in a step S15, the time is counted and the process returns to the step S11.

If the inequality of Q > Qₛₜₒₚ is not satisfied in the step S12, Q is compared with Q_{stby} in a step S16. If it is determined that (Qₛₜₒₚ >) Q > Q_{stby} in the step S16, it is determined in a step S17 whether or not the gas turbine bypass valve 11 is full-open. When it is determined that the bypass valve 11 is full-open, the auxiliary generator is set in the standby state in a step S18. Then, in the step S15, the time S_{stby} is counted and the process returns to the step S11 so that the supply power reaches the requisite power Pₘᵢₙ.

Further, if it is determined that the inequality of Q > Q_{stby} is not satisfied in the step S16, it is still determined in a step S19 whether or not the gas turbine bypass valve 11 is full-open. When it is determined that the bypass valve 11 is full-open, the auxiliary generator is set in the driving state in a step S20 by actuating the auxiliary diesel engine and connecting the auxiliary generator body thereto. Then, in the step S15, the time 3ₛₜₒₚ is counted and the process returns to the step S11 so that the supply power reaches the requisite power Pain.
In contrast, if it is determined in the step S17 or S19 that the gas turbine bypass valve 11 is not full-open, the opening amount of the bypass valve 11 is increased. Then, in the step S15, the time is counted and the process returns to the step S11 so that the supply power reaches the requisite power Pₘᵢₙ.

In this manner, the operation state of the auxiliary generator is changed among the shutoff state, the standby state and the driving state so as to achieve Q > Qₘᵢₙ. Further, the opening amount of the gas turbine bypass valve is increased to enhance heat recovery in the steam turbine so that the current reserve heat amount Q of the exhaust gas economizer becomes greater than Qₛₜₒₚ. Thus, the steam turbine generates more power than the gas turbine.
As a result, it is possible to maintain the requisite power needed until the auxiliary generator is actuated as shown in FIG.5 and thus, the blackout within the vessel is prevented. And, the period when the auxiliary generator is inactive can be increased, thereby saving the fuel.

Furthermore, in both the first preferred embodiment and the second preferred embodiment, the sudden decline of the power demand within the vessel causes power surplus within the vessel, and thus an opening amount of a gas turbine inlet valve 13 (ref. FIG.1) is controlled to suppress the output of the gas turbine or to discard the amount corresponding to the amount of the surplus power, thereby reducing the rotation speed thereof and preventing the turbine trip.

### [INDUSTRIAL APPLICABILITY]

According to the present invention, the blackout within the vessel against the sudden load change of the main engine is successfully prevented. Therefore, it is beneficial to apply the present invention to a control method and device for an exhaust heat recovery system.

## Claims

1. A control method for an exhaust heat recovery system which comprises an exhaust gas economizer to which exhaust gas generated in a main engine of a vessel is introduced via a turbocharger, a steam turbine powered by steam generated in the exhaust gas economizer, a gas turbine driving a generator together with the steam turbine, and an auxiliary generator compensating for a decline in electricity based on power generation by the generator, and in which a portion of the exhaust gas generated in the main engine is supplied to the gas turbine so as to discharge the exhaust gas from the gas turbine to the exhaust gas economizer, the control method comprising the steps of:
acquiring an estimated or calculated current reserve heat amount (Q) based on a heat energy detection signal of the exhaust gas economizer;
acquiring, based on an operation state of the auxiliary generator and power demand within the vessel, a reference heat amount (Qₘᵢₙ) that is required to maintain requisite power needed until the auxiliary generator is actuated;
comparing the current reserve heat amount (Q) and the reference heat amount (Qₘᵢₙ); and
selecting an operation state of the auxiliary generator based on a result of the comparing step, from a shutoff state, a standby state and a driving state.

2. The control method for the exhaust heat recovery system according to claim 1,
wherein the auxiliary generator is shut off when the current reserve heat amount (Q) reserved in the exhaust gas economizer is greater than a reserve heat amount (Qₛₜₒₚ) which is required to maintain requisite power until the auxiliary generator gets in a state to generate power from the shutoff state when the main engine stops.

3. The control method for the exhaust heat recovery system according to claim 2, wherein the auxiliary generator is set in the standby state when the current reserve heat amount (Q) reserved in the exhaust gas economizer is smaller than the reserve heat amount (Qₛₜₒₚ) and greater than a reserve heat amount (Q_{stby}) which is required to maintain requisite power until the auxiliary generator get in a state to generate power from the standby state when the main engine stops.

4. The control method for the exhaust heat recovery system according to claim 3, wherein the auxiliary generator is set in the driving state when the current reserve heat amount (Q) reserved in the exhaust gas economizer is smaller than both the reserve heat amount (Qₛₜₒₚ) and the reserve heat amount (Q_{stby}).

5. The control method for the exhaust heat recovery system according to claim 1, the control method further comprising the step of:
adjusting an opening of a bypass valve so that the current reserve heat amount (Q) reserved in the exhaust gas economizer becomes greater than the reference heat amount (Qₘᵢₙ), the bypass valve adjusting a flow rate of the exhaust gas and being arranged in a bypass line which bypasses the gas turbine to supply a portion of the exhaust gas generated in the main engine to the exhaust gas economizer.

6. The control method for the exhaust heat recovery system according to claim 5,
wherein the opening of the bypass valve is reduced when the current reserve heat amount (Q) reserved in the exhaust gas economizer is greater than a reserve heat amount (Qₛₜₒₚ) which is required to maintain requisite power until the auxiliary generator gets in a state to generate power from the shutoff state when the main engine stops.

7. The control method for the exhaust heat recovery system according to claim 4,
wherein the opening of the bypass valve is increased when the current reserve heat amount (Q) reserved in the exhaust gas economizer is smaller than the reserve heat amount (Qₛₜₒₚ) which is required to maintain requisite power until the auxiliary generator gets in a state to generate power from the shutoff state when the main engine stops.

8. A control device for an exhaust heat recovery system which comprises an exhaust gas economizer to which exhaust gas generated in a main engine of a vessel is introduced via a turbocharger, a steam turbine powered by steam generated in the exhaust gas economizer, a gas turbine driving a generator together with the steam turbine, an auxiliary generator compensating for a decline in electricity based on power generation by the generator and a portion of the exhaust gas generated in the main engine is supplied to the gas turbine so as to discharge (amount of heat of) the exhaust gas from the gas turbine to the exhaust gas economizer, the control device comprising:
an acquiring unit which estimates or calculates a current reserve heat amount (Q) based on a heat energy detection signal of the exhaust gas economizer;
an acquiring unit which obtains, based on an operation state of the auxiliary generator and power demand within the vessel, a reference heat amount (Qₘᵢₙ) which is required to maintain requisite power until the auxiliary generator is actuated; and
a control unit which controls the auxiliary generator by selecting an operation state of the auxiliary generator from a shutoff state, a standby state and a driving state so that the current reserve heat amount (Q) becomes greater than the reference heat amount (Qₘᵢₙ).

9. The control device for the exhaust heat recovery system, further comprising:
a bypass line which bypasses the gas turbine to supply a portion of the exhaust gas generated in the main engine to the exhaust gas economizer;
a bypass valve which is arranged in the bypass line and changes a flow rate of the exhaust gas; and
a bypass valve adjusting unit which adjusts an opening of the bypass valve so that the current reserve heat amount (Q) reserved in the exhaust gas economizer becomes greater than the reference heat amount (Qₘᵢₙ).
